# EUROPEAN PATENT APPLICATION

(11) **EP 4 586 124 A1**
(43) Date of publication of application: **16.07.2025**
(21) Application number: 23876364.3
(22) Date of filing: 28.08.2023
(51) Int. Cl.: G06F 21/64, G06F 21/57, G06F 21/56

(54) **INTEGRITY MEASUREMENT METHOD AND APPARATUS**

(30) Priority: 09.10.2022 CN 202211226020
(71) Applicant: Huawei Technologies Co., Ltd., Shenzhen, Guangdong 518129 (CN)
(72) Inventor: ZHU, Shaofeng, Shenzhen, Guangdong 518129 (CN); ZUO, Peng, Shenzhen, Guangdong 518129 (CN); ZHANG, Xiaohu, Shenzhen, Guangdong 518129 (CN)
(74) Representative: Isarpatent
(86) International application number: PCT/CN2023/115263
(87) International publication number: WO 2024/078159

(57) **Abstract**

Embodiments of this application provide an integrity measurement method and apparatus. An electronic device to which the method is applied includes two environments: a TEE and a non-TEE. The TEE includes a first trusted zone and a TEE management module. The first trusted zone is isolated from each component in the non-TEE and another trusted zone in the TEE. In other words, in a case of not being authorized, each component in the non-TEE and a component in the another trusted zone in the TEE do not have an access permission on a component in the first trusted zone. In embodiments of this application, a measurement module configured to perform integrity measurement is located in the first trusted zone, and performs an integrity measurement procedure by using a lightweight TEE management module as a trusted base. In this way, the measurement module has isolation performance to avoid being directly or indirectly attacked by another component, and can further reduce a risk of being attacked by the trusted base, namely, a TEE manager.

## Description

This application claims priority to Chinese Patent Application No. 202211226020.1, filed with the China National Intellectual Property Administration on October 9, 2022 and entitled "INTEGRITY MEASUREMENT METHOD AND APPARATUS", which is incorporated herein by reference in its entirety.

### TECHNICAL FIELD

Embodiments of this application relate to the network security field, and in particular, to an integrity measurement method and apparatus.

### BACKGROUND

With continuous development of internet technologies, network security technologies have also developed greatly. In recent years, an object suffering from a malicious network attack has gradually shifted from an executable file in a system of a terminal device to a process that is running in a memory, and this malicious attack on the memory has strong concealment. Therefore, how to accurately verify integrity of a memory has become one of urgent problems to be resolved currently.

In a conventional technology, a dynamic integrity measurement (dynamic integrity measurement, DIM) method is usually used to verify the integrity of a memory. In the DIM method, integrity measurement is performed on a part (for example, a kernel code segment, a kernel module code segment, and a user-mode process code segment) that does not change in a memory image, and whether the memory image is tampered with is determined based on an obtained measurement result, to determine whether the memory has suffered a malicious attack.

Currently, in the DIM method in the conventional technology, a measurement module performs integrity verification on a target object. However, the measurement module may also be attacked. In a case in which security of the measurement module cannot be ensured, reliability of an integrity verification result obtained by the measurement module is affected.

### SUMMARY

Embodiments of this application provide an integrity measurement method and apparatus, to provide system security to some extent.

According to a first aspect, an embodiment of this application provides an integrity measurement method. The method is applied to an electronic device, and the electronic device includes a trusted execution environment TEE and a non-TEE. The TEE includes a first trusted zone and a TEE management module, the first trusted zone is isolated from each component in the non-TEE, and the first trusted zone is also isolated from another trusted zone in the TEE. The first trusted zone includes a measurement module, and the TEE management module is lightweight. The method includes: The TEE management module obtains measurement request information, where the measurement request information is used to request to perform integrity measurement on a target component, and the target component is a component in the TEE or a component in a non-TEE. The TEE management module sends measurement indication information to the measurement module in response to the measurement request information, where the measurement indication information indicates the measurement module to perform integrity measurement on the target component. The TEE management module receives an integrity measurement result fed back by the measurement module. The integrity measurement result indicates whether the target component is complete. In this way, in this embodiment of this application, the measurement module configured to perform integrity measurement performs an interaction procedure of integrity measurement by using the management module as a trusted base. Because the management module is a lightweight module, an attack surface can be effectively narrowed, thereby further reducing a probability that the measurement module is attacked by using the management module. In addition, because the measurement module is isolated from another component, the measurement module itself is protected from being directly or indirectly attacked by the another component.

For example, the TEE management module is a TEE manager in this embodiment of this application.

For example, the measurement request information may be sent by the target component, or may be sent by a period measurement module.

In a possible implementation, the TEE further includes a second trusted zone, the second trusted zone includes at least one TEE application and a TEE operating system, and the at least one TEE application depends on the TEE operating system. The first trusted zone does not include a TEE operating system, and the measurement module depends on the TEE management module. In this way, in this embodiment of this application, the measurement module exclusively belongs to a trusted zone, and does not depend on a TEE operating system with a relatively heavy weight. This can effectively reduce an area that may be attacked, and improve security of the measurement module.

For example, the TEE application in the second trusted zone depends on the TEE operating system. The TEE operating system has permission to access the TEE application. To be specific, the TEE operating system may access a memory of the TEE application. If an attack exists, the TEE application may be attacked by using the TEE operating system. However, because the measurement module exclusively belongs to a trusted zone, does not depend on the TEE OS, and depends only on the lightweight TEE manager, an attack surface is narrowed, and a risk of being attacked by the TEE manager is reduced.

In a possible implementation, that the TEE management module sends measurement indication information to the measurement module in response to the measurement request information includes: The TEE management module performs validity verification on the target component based on the measurement request information. When validity verification on the target component succeeds, the TEE management module sends the measurement indication information to the measurement module. In this way, the TEE manager in this embodiment of this application additionally has a validity verification function, to prevent an unauthorized application from accessing the measurement module by using the TEE manager, and ensure security of the measurement module. For example, unauthorized software disguises as the target component to send the measurement request information to the TEE manager. However, because the TEE manager does not pre-store related information of the unauthorized software, validity verification on the unauthorized software fails. The TEE manager rejects a request of the unauthorized software, to prevent the unauthorized software from accessing the measurement module by using the TEE manager.

In a possible implementation, the measurement request information includes identification information and target storage address information of the target component, and the target storage address information indicates target storage space in which program code of the target component is stored. That the TEE management module performs validity verification on the target component based on the measurement request information includes: The TEE management module verifies the identification information and the target storage address information of the target component based on pre-stored component information. The component information is obtained by the TEE management module when the TEE management module is installed in the electronic device, and the component information includes identification information and storage address information that correspond to all components in the non-TEE. When verification on the identification information and the target storage address information of the target component succeeds, the TEE management module determines that validity verification on the target component succeeds. In this way, in this embodiment of this application, an identifier and an address of a valid component are maintained in advance. When verification on both the identifier and the address succeeds, it is determined that the component is valid. For a disguised invalid component, because identification information and a storage address of the component are not maintained in advance, it is determined that the component is an invalid component. Other operations of the invalid component are rejected, so that system security is ensured and access of the invalid component is avoided.

In a possible implementation, that the TEE management module sends measurement indication information to the measurement module in response to the measurement request information further includes: When validity verification on the target component succeeds, the TEE management module updates an access permission of the target component on the target storage space from a first access permission to a second access permission, and sends the measurement indication information to the measurement module, where the first access permission is an access forbidden permission, and the second access permission is a read access permission; and the measurement indication information includes the target storage address information, so that the measurement module obtains the program code of the target component from the target storage space based on the target storage address information and the second access permission, and performs integrity measurement on the program code of the target component. In this way, in this embodiment of this application, the measurement module is allowed to access a memory of another component only when the measurement module needs to perform integrity measurement on a component, so that a read access permission of a single application is a granularity that is set for access. In this way, an access permission is accurately controlled to avoid attacking the another component by using the measurement module, thereby improving security of the component.

In a possible implementation, after the TEE management module receives the integrity measurement result fed back by the measurement module, the method further includes: The TEE management module updates the access permission of the target component on the target storage space from the second access permission to the first access permission. In this way, in this embodiment of this application, a permission of the measurement module is revoked in time, to prevent another component from being attacked by the measurement module. For example, when unauthorized software attacks the measurement module and attempts to further access another component by using the measurement module, to tamper with program code of the another component. In this case, because the measurement module does not have a permission to access another component, the system denies the access of the measurement module.

In a possible implementation, the target component is an application, an operating system, or a service.

For example, the target component may be an application or an operating system in a non-TEE environment. Alternatively, the target component may be an application, an operating system, or a virtualization manager (which may also be understood as a virtualization management service) in a virtual machine (or referred to as a virtualization environment) in a non-TEE environment. Alternatively, the target component may be a TEE app, a TEE OS, or the like in the TEE.

According to a second aspect, an embodiment of this application provides an integrity measurement apparatus. The apparatus includes a trusted execution environment TEE and a non-TEE. The TEE includes a first trusted zone and a TEE management module. The first trusted zone is isolated from each component in the non-TEE. The first trusted zone is isolated from another trusted zone in the TEE. The first trusted zone includes a measurement module. The TEE management module is a lightweight TEE management module. The TEE management module is configured to obtain measurement request information, where the measurement request information is used to request to perform integrity measurement on a target component. The target component is a component in the TEE or a component in the non-TEE. The TEE management module is further configured to send measurement indication information to the measurement module in response to the measurement request information, where the measurement indication information indicates the measurement module to perform integrity measurement on the target component. The measurement module is configured to: perform integrity measurement on the target component based on the measurement request information, and obtain an integrity measurement result, where the integrity measurement result indicates whether the target component is complete. The measurement module is further configured to feed back the integrity measurement result to the TEE management module.

In a possible implementation, the TEE further includes a second trusted zone, the second trusted zone includes at least one TEE application and a TEE operating system, and the at least one TEE application depends on the TEE operating system; and the first trusted zone does not include a TEE operating system, and the measurement module depends on the TEE management module.

In a possible implementation, the TEE management module is specifically configured to: perform validity verification on the target component based on the measurement request information; and send the measurement indication information to the measurement module when validity verification on the target component succeeds.

In a possible implementation, the measurement request information includes identification information and target storage address information of the target component, and the target storage address information indicates target storage space in which program code of the target component is stored. The TEE management module is specifically configured to: verify the identification information and the target storage address information of the target component based on pre-stored component information, where the component information is obtained by the TEE management module when the TEE management module is installed in the electronic device, and the component information includes identification information and storage address information that correspond to all components in the non-TEE; and when verification on the identification information and the target storage address information of the target component succeeds, determine that validity verification on the target component succeeds.

In a possible implementation, the TEE management module is specifically configured to: when validity verification on the target component succeeds, update, by the TEE management module, an access permission of the target component on the target storage space from a first access permission to a second access permission, and send the measurement indication information to the measurement module, where the first access permission is an access forbidden permission, and the second access permission is a read access permission; and the measurement indication information includes the target storage address information. The measurement module is configured to: obtain the program code of the target component from the target storage space based on the target storage address information and the second access permission, and perform integrity measurement on the program code of the target component.

In a possible implementation, the TEE management module is specifically configured to: after receiving the integrity measurement result fed back by the measurement module, update the access permission of the target component on the target storage space from the second access permission to the first access permission.

In a possible implementation, the target component is an application, an operating system, or a service.

According to a third aspect, an embodiment of this application provides a computer-readable medium, configured to store a computer program, where the computer program includes instructions used to perform the method according to the first aspect or any one of the possible implementations of the first aspect.

According to a fourth aspect, an embodiment of this application provides a computer program, where the computer program includes instructions used to perform the method according to the first aspect or any one of the possible implementations of the first aspect.

According to a fifth aspect, an embodiment of this application provides a chip, where the chip includes a processing circuit and a transceiver pin. The transceiver pin and the processing circuit communicate with each other through an internal connection path. The processing circuit performs the method according to the first aspect or any one of the possible implementations of the first aspect, to control a receive pin to receive a signal and a transmit pin to send a signal.

### BRIEF DESCRIPTION OF DRAWINGS

FIG. 1 is a diagram of an example of a system architecture;
FIG. 2 is a diagram of an example of a structure of a plurality of trusted zones;
FIG. 3 is a diagram of an example of a structure of a non-TEE;
FIG. 4 is a schematic flowchart of an example of an integrity measurement technology;
FIG. 5 is a diagram of an example of a system architecture;
FIG. 6 is a diagram of an example of a system architecture;
FIG. 7 is diagram of a structure of a TEE according to an embodiment of this application;
FIG. 8 is a deployment diagram of an example of a TEE;
FIG. 9 is a diagram of an example of module interaction;
FIG. 10 is a schematic flowchart of an example of integrity measurement; and
FIG. 11 is a diagram of an example of a structure of an apparatus.

### DESCRIPTION OF EMBODIMENTS

The following clearly and completely describes technical solutions in embodiments of this application with reference to accompanying drawings in the embodiments of this application. Apparently, the described embodiments are some but not all of embodiments of this application. All other embodiments obtained by a person of ordinary skill in the art based on embodiments of this application without creative efforts shall fall within the protection scope of this application.

The term "and/or" in this specification describes only an association relationship for describing associated objects and represents that three relationships may exist. For example, A and/or B may represent the following three cases: Only A exists, both A and B exist, and only B exists.

In this specification and claims in embodiments of this application, the terms "first", "second", and the like are used for distinguishing between different objects, but are not used for describing a particular order of the objects. For example, a first target object, a second target object, and the like are used for distinguishing between different target objects, but are not used for describing a particular order of the target objects.

In embodiments of this application, words such as "example" or "for example" are for representing giving an example, an illustration, or a description. Any embodiment or design scheme described as an "example" or "for example" in embodiments of this application should not be explained as being more preferred or having more advantages than another embodiment or design scheme. Exactly, use of the word such as "example" or "for example" is intended to present a relative concept in a specific manner.

In descriptions of embodiments of this application, unless otherwise stated, "plurality of" means two or more than two. For example, a plurality of processing units mean two or more processing units, and a plurality of systems mean two or more systems.

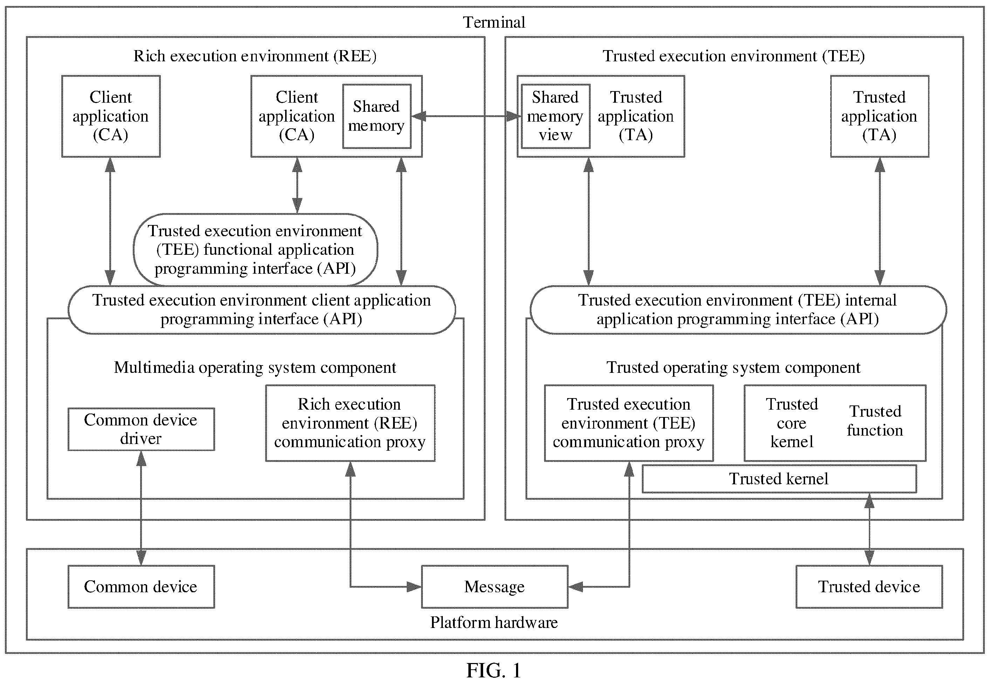

FIG. 1 is a diagram of an example of a system architecture. Refer to FIG. 1. The system architecture includes a trusted execution environment (trusted execution environment, TEE) and a rich execution environment (rich execution environment, REE). A highly security-sensitive application is isolated from a general-purpose software environment, to provide a dedicated trusted execution environment TEE, and protect confidentiality, integrity, and an access permission of a resource and data of the application. Conventional operating systems such as Android prone to an attack are provided with a general-purpose rich execution environment REE. An application executed on an REE side is referred to as a client application (client application, CA), such as a bank application or another third-party payment application. An application executed on a TEE side is referred to as a trusted application (trusted application, TA), such as an application that executes key services, for example, signature and encryption/decryption computation. Because a TA runs in a trusted execution environment TEE, a deployment/upgrade operation of the TA needs to strictly comply with security verification specifications of a TEE distributor (usually a terminal vendor). For example, measures such as using a digital signature are taken to ensure that each part of the TEE is truly trusted. The trusted execution environment TEE includes a trusted execution environment internal application programming interface (trusted execution environment internal application programming interface, TEE Internal API) and a trusted operating system component. The TEE Internal API mainly provides a function of the trusted operating system component, communicates with a client application CA, implements communication between TAs, and provides security storage, a cryptology function, a time function, and the like in an upstream direction. The trusted operating system component mainly includes a trusted core framework, a trusted function, a trusted kernel, and a trusted execution environment TEE communication proxy. The trusted core framework provides a function similar to an operating system for a TA. The trusted function provides a supporting capability for an application developer. The trusted kernel is configured to interact with a trusted device in platform hardware. The trusted execution environment communication proxy provides a secure communication channel for a TA and a CA. For example, the trusted execution environment communication proxy transmits a message to a rich execution environment communication proxy by using the platform hardware, to implement interaction between the TA and the CA. The rich execution environment REE includes a trusted execution environment client application programming interface (trusted execution environment client application programming interface, TEE Client API), a trusted execution environment functional application programming interface (trusted execution environment functional application programming interface, TEE Functional API), and a multimedia operating system. A multimedia operating system component mainly includes a common device driver and a rich execution environment communication proxy. The rich execution environment communication proxy is configured to: communicate with the TEE and provide a secure communication channel for a CA and a TA. The common device driver is configured to drive a common device in the platform hardware. By using the TEE Client API and the TEE Functional API, the CA accesses a security service provided by the TA.

In this embodiment of this application, a set of all security protection mechanisms used to implement security protection of a computer system may be referred to as a trusted base of the computer system. A mechanism may appear in a form of hardware, firmware, and/or software. Once a program error or a security risk occurs in a component of the trusted base, security of the entire system is compromised.

It should be noted that the system architecture in FIG. 1 is merely an example. In another embodiment, the system architecture may include more or fewer components or modules. This is not limited in this application.

It should be further noted that a terminal in this embodiment of this application may be an electronic device such as a tablet computer, a mobile terminal (such as a mobile phone), a laptop computer, a desktop computer, a wearable device, an optical line terminal (optical line terminal, OLT), or an optical network terminal (optical network terminal, ONT). This is not limited in this application.

It should be further noted that a system framework in this embodiment of this application may be an ARM architecture, or may be another architecture. This is not limited in this application.

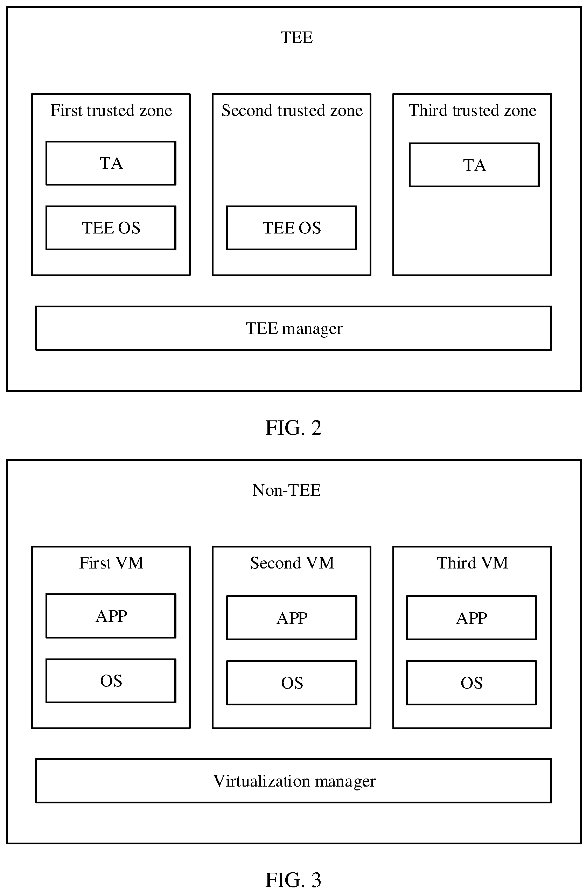

In a possible implementation, the TEE may include at least one trusted zone (which may also be referred to as a trusted region or a security zone, and is not limited in this application). FIG. 2 is a diagram of an example of a structure of a plurality of trusted zones. Refer to FIG. 2. For example, a TEE may include at least one trusted zone. In FIG. 2, only an example in which the TEE includes a first trusted zone, a second trusted zone, and a third trusted zone is used for description. In another embodiment, the system may include more or fewer trusted zones. This is not limited in this application.

For example, a virtualization manner for a plurality of trusted zones in the TEE is similar to a manner of virtualization (referring to FIG. 3) in a non-TEE, and may also be understood as a virtualization solution. In other words, in this embodiment of this application, a plurality of trusted zones may be obtained through virtualization based on a structure of the TEE.

For example, the trusted zones are isolated from each other, that is, different trusted zones cannot access each other without authorization. It may also be understood that memories of the trusted zones are isolated from each other. In other words, different trusted zones cannot access each other's memories without authorization.

For example, a trusted zone may include at least one of a TA and a TEE OS. For example, the first trusted zone includes at least one TA and a TEE OS. The second trusted zone includes a TEE OS. The third trusted zone includes at least one TA. A specific layout may be set based on an actual requirement. This is not limited in this application.

For example, the TEE further includes a TEE manager (which may also be referred to as a TEE management module). The TEE manager may also be referred to as a TEE management module. The TEE manager is configured to provide, for the TEE, a service for establishing and managing a trusted zone in the TEE. In this embodiment of this application, the TEE manager is responsible for a small quantity of functions, and has a small code amount.

Optionally, a region other than a TEE in a terminal may also be referred to as a non-TEE. FIG. 3 is a diagram of an example of a structure of a non-TEE. Refer to FIG. 3. For example, a virtualization environment may be disposed in the non-TEE, including but not limited to a first VM (Virtual machine, virtual machine), a second VM, and a third VM. It should be noted that a quantity of VMs in FIG. 3 and components included in FIG. 3 are merely examples. This is not limited in this application.

Still refer to FIG. 3. For example, each VM includes but is not limited to at least one application (App) and an operating system (OS, Operating System). Optionally, in the virtualization environment, a virtualization manager (which may also be referred to as a virtualization management module, a virtualization management unit, a virtualization management component, or the like, and is not limited in this application) may be further disposed in the non-TEE. The virtualization manager is configured to create and manage at least one VM in the non-TEE.

It should be noted that, for a layout in the non-TEE environment in this embodiment of this application, refer to FIG. 1, or refer to FIG. 3. To be specific, the non-TEE may be a virtualization environment, or may be a non-virtualization environment, or may be a combination of a virtualization environment and a non-virtualization environment. This is not limited in this application.

For example, during running of a computer system, a component (including an application and an operating system in a non-virtualization environment and/or an application and an operating system in a virtualization environment) in the non-TEE is prone to an attack. Consequently, program code (which may also be referred to as program instructions or a computer program, and is not limited in this application) of a component in a memory is tampered with. To monitor, in real time, an attack that compromises integrity of a component in the non-TEE, an integrity measurement technology can be used to perform integrity verification on the component to detect whether the component is complete, that is, whether the component is tampered with.

For example, the integrity measurement technology is a mechanism for monitoring integrity of a program such as an App or an OS during running of a computing system. During system running, program code or program code and data stored in a memory of a target component to be measured are read, and a measurement Hash (hash) value is calculated. The Hash value is compared with a reference Hash value to determine whether integrity of the target component is compromised.

In other words, a principle of integrity measurement is to detect whether program code that is of a component and that is currently stored in a memory is consistent with original program code of the component. If they are consistent, the component is complete. If they are inconsistent, the component is incomplete, that is, the component is tampered with.

It should be noted that the target component in this embodiment of this application may be a component in the non-TEE, for example, may be a component such as an application, an operating system, and a virtualization manager; or may be a component in a TEE, for example, may be a TEE app or a TEE OS. In this embodiment of this application, only an example in which integrity measurement is performed on the target component in the non-TEE is used for description. For integrity measurement of a component in the TEE, also refer to an integrity measurement procedure in the non-TEE. Examples are not enumerated in this application. Optionally, the application and the operating system in this embodiment of this application may be an application and an operating system in a non-virtualization environment in FIG. 1, or may be an application and an operating system in a virtualization environment in FIG. 3. This is not limited in this application, and details are not described below.

It should be further noted that, in this embodiment of this application, data of the target component may also be referred to as a read-only data segment. The read-only data segment may be optionally immutable data in the target component. For mutable data, integrity measurement cannot be performed on the mutable data because of variability of the mutable data during program running. Details are not described below.

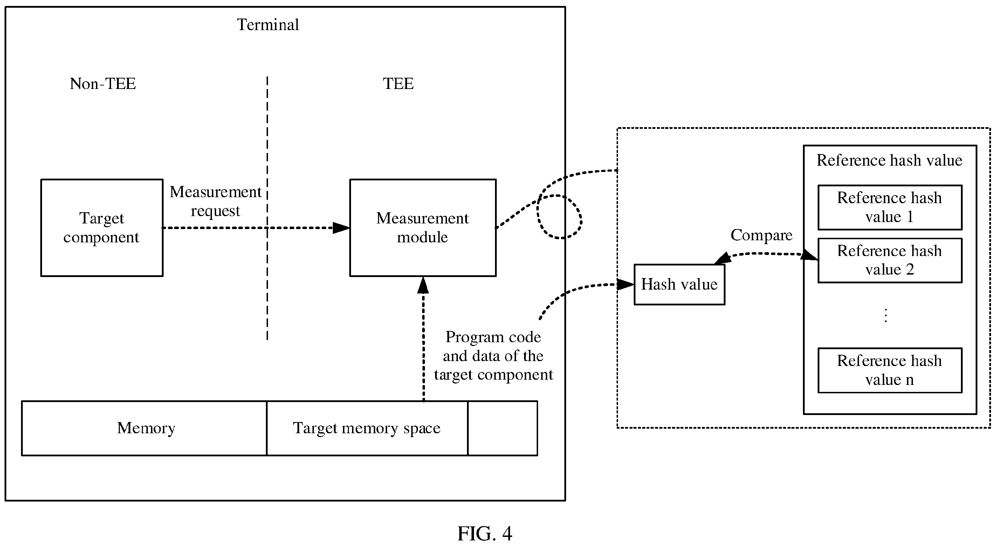

For example, FIG. 4 is a schematic flowchart of an example of an integrity measurement technology. With reference to FIG. 4, a target component in a non-TEE may send a measurement request to a measurement module in a TEE. The measurement request includes but is not limited to identification information of the target component, memory address information of the target component, and the like, and the measurement request is used to request the measurement module to perform integrity measurement on the target component. For example, the memory address information of the target component includes but is not limited to memory address information of program code of the target component and memory address information of data of the target component. The memory address information indicates a location at which corresponding code or data is stored in memory space. For example, the program code of the target component is program code executed when hardware invokes the target component. The data of the target component is optionally some data corresponding to the target component, for example, may be a user account or a password. This is not limited in this application.

Still refer to FIG. 4. For example, in response to the measurement request, the measurement module obtains the program code of the target component and the data of the target component from a memory control indicated by the target address information. The measurement module may generate a hash value (referred to as a measurement hash value below) based on the obtained program code and data of the target component. For a specific generation manner thereof, refer to an embodiment of a conventional technology. Details are not described in this application.

For example, the measurement module pre-stores a hash value corresponding to at least one component in the non-TEE. The hash value is referred to as a reference hash value in this embodiment of this application. For example, the reference hash value includes a reference hash value 1 to a reference hash value n. Optionally, the reference hash value is obtained by the measurement module in an initial phase. To be specific, the measurement module may obtain program code and data of each component in the non-TEE in the initial phase (which may also be understood as initial installation or loading), generate a corresponding reference hash value, and store the reference hash value.

Still refer to FIG. 4. For example, the measurement module may compare the measurement hash value of the target component with a reference hash value of the target component. In an example, if the two hash values are the same, integrity verification succeeds, that is, the target component is complete. It may also be understood that current program code and data of the target component are consistent with those obtained by the measurement module in an initialization phase. In another example, if the two hash values are different, integrity verification fails, that is, the target component is incomplete (or may be understood as that the target component is tampered with). It may also be understood that current program code and data of the target component are inconsistent with those obtained by the measurement module in the initialization phase.

In an example, the measurement module may feed back a measurement result to the target component. The measurement result includes an integrity verification success indication or an integrity verification failure indication.

In another example, the measurement module may feed back a measurement result to the target component and a remote user. The remote user may be a host of a terminal, or may be another terminal user connected to the terminal. This is not limited in this application.

In still another example, if integrity verification succeeds, a result may be fed back to the target component and a remote user. If integrity verification fails, it indicates that the target component is abnormal, and a result does not need to be fed back to the target component, and the result may be directly fed back to the remote user.

For example, the target component may perform a subsequent operation in response to a received measurement result. For example, if the measurement request is sent to the measurement module before the target component needs to run or download data, if the measurement result is that integrity verification succeeds, the target component may continue to run or download the data. If the measurement result is that integrity verification fails, the target component stops running.

For example, if the remote user determines, based on the measurement result, that integrity verification fails, prompt information or the like may be displayed on a display of the remote user, and an alarm is sent to the user. A specific subsequent procedure may be set based on an actual requirement. This is not limited in this application.

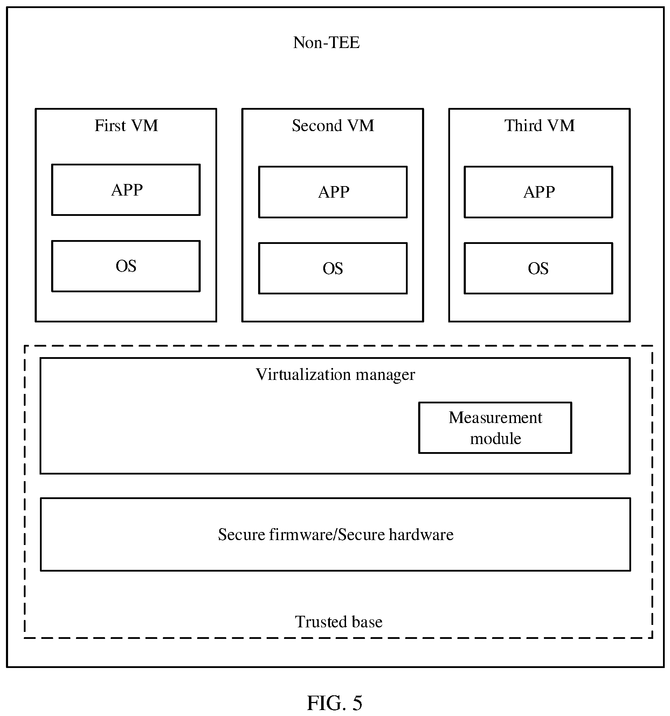

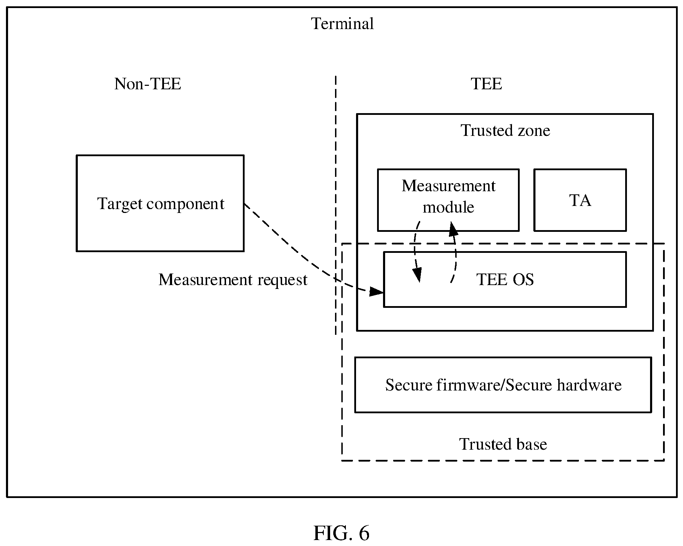

FIG. 5 and FIG. 6 each are a diagram of a system architecture in embodiments of conventional technologies. Refer to FIG. 5. For example, a virtualization environment is used as an implementation basis, and a trusted base of a system includes a virtualization manager and some other secure firmware or secure hardware. A measurement module is disposed in the virtualization manager. For example, specific steps include but are not limited to:
(1) In a startup phase, in a manner of internal calculation or external import during loading, the measurement module stores reference hash values of all components (including an application, an operating system, and the like. For example, a component may be an App in a first VM) that need to be measured.
(2) During running, a target component sends a measurement request to the measurement module disposed in the virtualization manager.
(3) The measurement module directly reads program code and data of the target component in target memory space (referring to the diagram in FIG. 4) based on the measurement request, and calculates a measurement hash value.
(4) The measurement module compares the calculated measurement hash value with a reference hash value of the target component, and obtains a measurement result.
(5) The measurement module feeds back the measurement result to the target component and/or a remote user. For a part that is not described, refer to the foregoing descriptions. Details are not described herein again.

In the conventional technology shown in FIG. 5, the measurement module depends on a virtualization management module, and a code amount of the virtualization module is usually 846 KLOC. Because a code amount of the trusted base on which the measurement module depends is large, an attack surface of the system is large. In addition, because a privilege level (which may also be referred to as a permission level) of the virtualization manager is high, the virtualization manager has permission to access all VMs and memory space of applications and operating systems included in the VMs. Therefore, if the measurement module is attacked due to a vulnerability of the measurement module, the virtualization manager may access, by using the measurement module, all virtualized operating systems and virtualized applications running on the virtualization manager in the system, and compromise integrity of the applications and/or the operating systems in the VMs. In addition, similarly, because the measurement module is disposed in the virtualization manager, the virtualization manager includes another component, and the another component may have a program vulnerability, an attacker may attack the measurement module by using the another component, and may tamper with integrity of an application and an operating system in a non-TEE by using the measurement module. In addition, because the measurement module may be attacked, reliability of a measurement result obtained by the measurement module is reduced.

Refer to FIG. 6. For example, a trusted base of a system includes but is not limited to a TEE OS and secure firmware or secure hardware or the like in a trusted zone. For example, specific steps include but are not limited to: A target component sends a measurement request to the TEE OS, the TEE OS sends the measurement request to a measurement module, and the measurement module performs integrity measurement. For specific descriptions, refer to the foregoing descriptions. Details are not described herein again. The measurement module feeds back a measurement result to the TEE OS, and the TEE OS feeds back the measurement result to the target component. In this example, the measurement module also has permission to access all applications and operating systems.

In the conventional technology shown in FIG. 6, the measurement module depends on the operating system, that is, interacts with another component by using the operating system. Because a code amount of the TEE OS is approximately 253 KLOC, a trusted base on which a DIM solution for the measurement module depends is large (that is, has a large amount of code), and consequently an attack surface is large. In addition, similar to the procedure in FIG. 5, because the measurement module has a high permission level, if the measurement module is attacked, an attacker may access, by using the measurement module, all applications and operating systems running in the system, and compromise integrity of the applications and the operating systems.

For a problem in a conventional technology that a measurement module is prone to an attack and has poor security, an embodiment of this application provides an integrity measurement method. In the method, a measurement module is disposed in an independent TEE environment and depends on a lightweight trusted base, to ensure security of the measurement module and improve overall system security and stability.

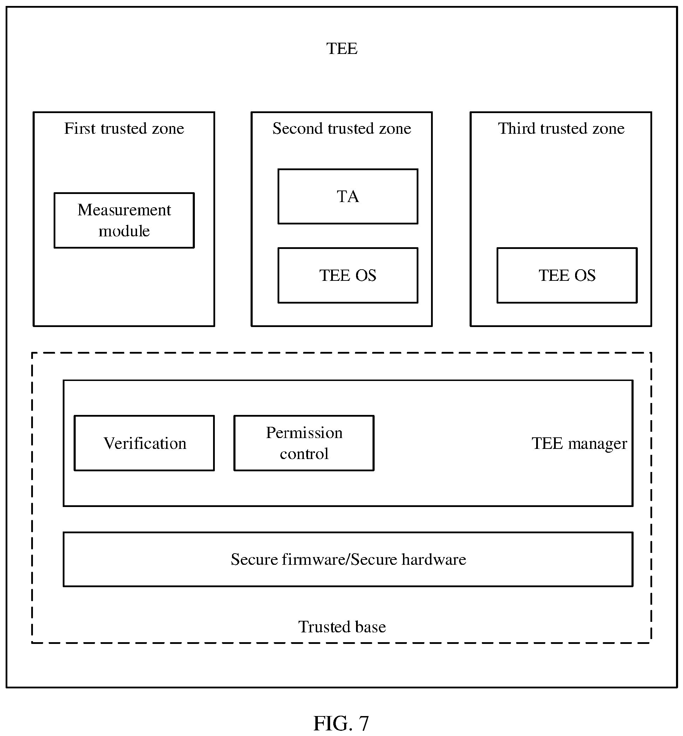

With reference to FIG. 1, FIG. 7 is a diagram of a structure of a TEE according to an embodiment of this application. Refer to FIG. 7. For example, the TEE may include at least one trusted zone, for example, a first trusted zone, a second trusted zone, and a third trusted zone. It should be noted that a quantity and a layout of trusted zones in this embodiment of this application are merely examples, and are not limited in this application.

For example, the first trusted zone includes a measurement module. The second trusted zone includes but is not limited to at least one TA and a TEE OS. The third trusted zone includes but is not limited to a TEE OS. In this embodiment of this application, quantities and types of components included in the second trusted zone and the third trusted zone are merely examples. The second trusted zone and the third trusted zone each may include at least one of a TA and a TEE OS, for example, may include only a TA, or may include a TA and a TEE OS, or may include only a TEE OS. This may be set based on an actual requirement, and is not limited in this application.

For example, a trusted base of the TEE includes but is not limited to a TEE manager and some secure firmware or secure hardware or the like.

In this embodiment of this application, for a layout in a non-TEE, refer to FIG. 1 or FIG. 3. This is not limited in this application.

For example, the measurement module may be configured to perform integrity measurement on a target component.

Optionally, the TEE manager includes but is not limited to a measurement relay module (or may be referred to as a measurement relay component). The measurement relay module includes a verification unit and a permission control unit (or may be referred to as a verification component and a permission control component). This is not limited in this application. The verification unit is configured to perform security verification on a component on which integrity measurement needs to be performed. The permission control unit is configured to manage and control an access permission of the measurement module on another component.

For example, the measurement relay module exchanges data with the measurement module; and the measurement relay module may be configured to send a measurement indication to the measurement module or receive a measurement result fed back by the measurement module. In other words, in this embodiment of this application, the measurement module depends on the measurement relay module, and exchanges only control information (including the measurement indication and the measurement result) with the measurement relay module.

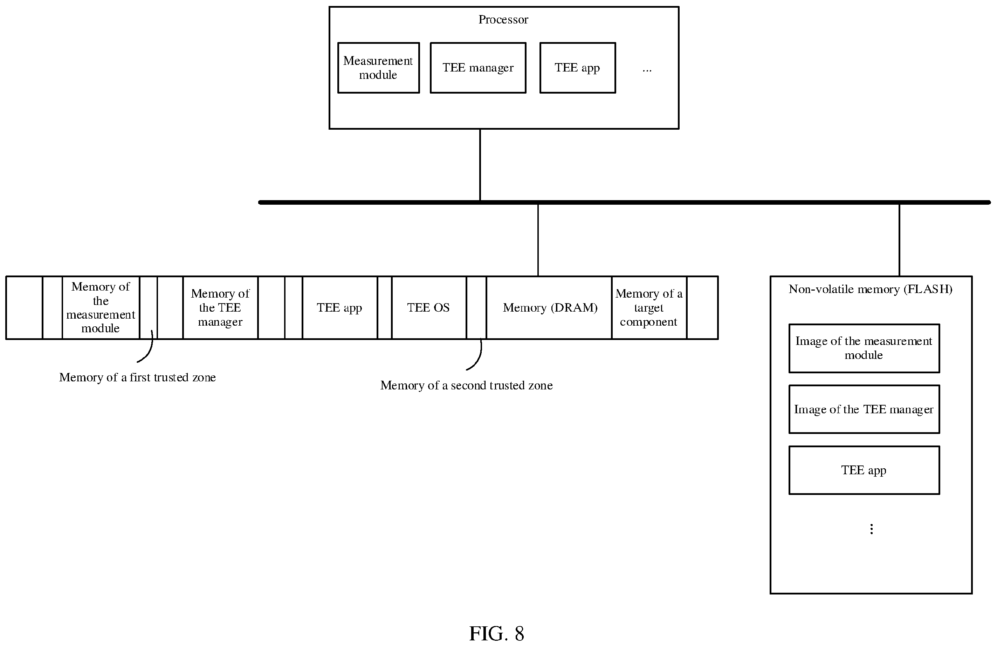

With reference to FIG. 7, FIG. 8 is a deployment diagram an example of a TEE. With reference to FIG. 8, a terminal includes but is not limited to a processor and an internal memory. The internal memory may be configured to store computer-executable program code. The executable program code includes instructions. The internal memory may include a high-speed random access memory, and may further include a non-volatile memory (Flash), for example, at least one magnetic disk storage device, a flash storage device, or a universal flash storage (universal flash storage, UFS).

In this embodiment of this application, before a system is started (or may be understood as before the terminal is initialized), images of components such as a measurement module, a TEE manager, a target component (not shown in the figure), a TEE app, and a TEE OS are stored in the non-volatile memory. After the system is started (that is, after an initialization phase of the terminal), the terminal (which may be specifically a startup module (for example, a BootLoader) in the terminal, and details are not described below) loads a plurality of images in the non-volatile memory to a system memory (for example, a DRAM).

As shown in FIG. 8, after system loading is completed, the memory includes but is not limited to a memory of a first trusted zone, a memory of the TEE manager, a memory of a second trusted zone, a memory of the target component, and the like.

For example, the memory of the first trusted zone includes a memory of the measurement module. The memory of the measurement module is configured to store program code of the measurement module. In other words, memory space in which the program code of the measurement module is stored is located in a memory area (or memory space) of the first trusted zone.

For example, the memory of the second trusted zone includes but is not limited to a memory of the TEE app and a memory of the TEE OS. The memory of the TEE app is configured to store program code and data of the TEE app, and the memory of the TEE OS is configured to store program code of the TEE OS. In other words, both memory space in which the program code (and the data) of the TEE app is stored and memory space in which the program code of the TEE OS is stored are located in a memory area of the second trusted zone.

For example, the memory of the TEE manager is configured to store program code of each component included in the TEE manager. The memory of the target component is configured to store program code of the target component, or program code and data of the target component.

In this embodiment of this application, the memory of the first trusted zone in which the measurement module is located is isolated from any component (including a component in the TEE or a component in a non-TEE) in the terminal other than the TEE manager. Correspondingly, the memory of the measurement module is isolated from another component. In other words, in this embodiment of this application, any component in the terminal other than the TEE manager has no permission to access the memory of the measurement module.

In this embodiment of this application, when the measurement module is not configured to have a permission to access a memory of another component, the measurement module does not have a permission to access the memory of the another component either. A manner of configuring an access permission of the measurement module is described in detail below.

In this embodiment of this application, memory isolation may also be understood as component isolation. To be specific, components isolated from each other cannot access each other's memories without authorization.

In addition, in this embodiment of this application, as shown in FIG. 8, the memory of the measurement module exclusively belongs to a memory area, that is, exclusively belongs to a trusted zone, and the trusted zone corresponding to the measurement module does not include another component. Optionally, in another embodiment, the trusted zone to which the measurement module belongs may also include at least one TEE app with a relatively light weight (that is, program code is lightweight program code). A total amount of program code of the TEE app that is in the same trusted zone as the measurement module is less than a threshold (which may be set based on an actual requirement, and is not limited in this application), to reduce a weight of the trusted zone, narrow an attack surface, and reduce an attack probability.

In this embodiment of this application, in a loading phase, that is, a phase in which the terminal loads the images of the components to the memories, identification information and address information of all components (including an application, an operating system, and/or a virtualization manager, and the like) in the non-TEE may be loaded into the memory of the TEE manager, or identification information and address information of a component that is in the non-TEE and on which integrity verification needs to be performed may be loaded into the memory of the TEE manager.

The identification information may be an ID of the component. The address information is an address corresponding to memory space in which program code or data of the component is stored (which may also be referred to as a memory address). Optionally, the identification information and the address information of the component may be stored in the memory of the TEE manager in a form of a list or the like. This is not limited in this application. In this way, in an integrity measurement phase, the TEE manager (which is specifically a verification module) may perform security verification (which may also be referred to as validity verification, and is not limited in this application) on the component based on the maintained address information. A specific verification manner is described in detail below.

For example, the identification information and the memory address information of the component that are maintained in the TEE manager may be stored in a form of a list (for example, referred to as an address space layout list). In another embodiment, the information may be stored in another form. This is not limited in this application.

Optionally, after the system is started, a virtual VM (including an application and/or an operating system), an application, and/or an operating system may also be newly installed in the non-TEE, and the memory of the TEE manager also obtains identification information and address information of the newly installed component.

For example, a page table of the measurement module (referred to as a measurement module page table below) is further loaded into the memory of the TEE manager. For example, the measurement module page table includes but is not limited to a memory address of a component, a physical address corresponding to the memory address, an access permission, and the like. The component is all components in the non-TEE, or a component on which integrity measurement needs to be performed. The memory address is a memory address of the component in memory space. The physical address is an actual physical address corresponding to the memory address. The access permission includes but is not limited to a read access permission, a write access permission, an access forbidden permission, and the like. For example, each initial access permission in the page table is an access forbidden permission. In other words, a permission of the measurement module on memory space that is of each component and that is indicated in the page table is "access forbidden". To be specific, the measurement module is forbidden to access the memory space of the component. It may be understood that, as described above, the measurement module in this embodiment of this application has no permission to access another component without authorization.

For example, the memory of the measurement module stores program code of the measurement module and a reference hash value list. In an example, the reference hash value list includes but is not limited to a correspondence between memory address information of each component (which may be all components in the non-TEE or a component on which integrity measurement needs to be performed) and a reference hash value. In another example, the reference hash value list may include but is not limited to a correspondence between identification information of each component and a reference hash value. In still another example, the reference hash value list may alternatively include only a reference hash value of each component. This is not limited in this application.

The reference hash value of each component may be obtained by the terminal (for example, the terminal may be the startup module) through calculation based on program code of the component, or may be obtained by the terminal through calculation based on program code and data of the component. For a specific calculation manner, refer to an existing technology. Details are not described in this application. Optionally, the reference hash value of the component may be externally imported, for example, may be downloaded from a vendor server of the component. This is not limited in this application. It may be understood that the reference hash value is a benchmark for verifying whether the component is complete, that is, whether the program code and/or data of the component are/is complete. In this way, the measurement module may perform, based on the pre-stored reference hash value, integrity verification on the component on which integrity measurement needs to be performed. A specific verification manner is described in detail below.

For example, similar to the measurement module, another component is also corresponding to its own page table, and a page table of each component is used to record an access permission of the component on memories of different components. In this embodiment of this application, as described above, the memory of the measurement module is isolated from another component. In other words, no component other than the TEE manager has permission to access the memory of the measurement module (which may also be understood as the memory of the first trusted zone). Correspondingly, the page table of the another component may not include related information of the memory of the measurement module (or the first trusted zone), to indicate that the component does not have a permission to access the memory of the measurement module. Alternatively, the page table of the component may include related information of the memory of the measurement module, and a corresponding access permission is access forbidden. In this layout manner, it may be considered that the measurement module implements an independent trusted zone, and the measurement module is isolated from a component in another trusted zone and each component in the non-TEE. This can prevent an attacker from attacking the measurement module by using another component, thereby reducing a probability that the measurement module is attacked. In addition, in this embodiment of this application, the measurement module no longer depends on a component with a relatively heavy weight (that is, program code) such as a TEE OS or a virtualization manager, but depends on the TEE manager with a relatively light weight. To be specific, a DIM solution in this embodiment of this application is implemented by using the TEE manager as a trusted base. Program code (that is, a weight) of the TEE manager is a magnitude of 10 KLOC, and is far less than weights of the TEE OS and the virtualization manager. Correspondingly, the TEE manager has a relatively light weight, and an attack surface is relatively small correspondingly, thereby reducing a probability that the measurement module is attacked by using the TEE manager. A DIM interaction process in which the measurement module depends on the TEE manager is described in detail in the following embodiment.

Still with reference to FIG. 8, the processor runs the program code in the memory, so that the terminal can perform a corresponding function. For example, in this embodiment of this application, in an integrity measurement phase, the processor may run the measurement module and the TEE manager. In a running process, the processor reads the memory of the measurement module to run the program code of the measurement module, and the processor reads the memory of the TEE manager to run program code of a related component of the TEE manager.

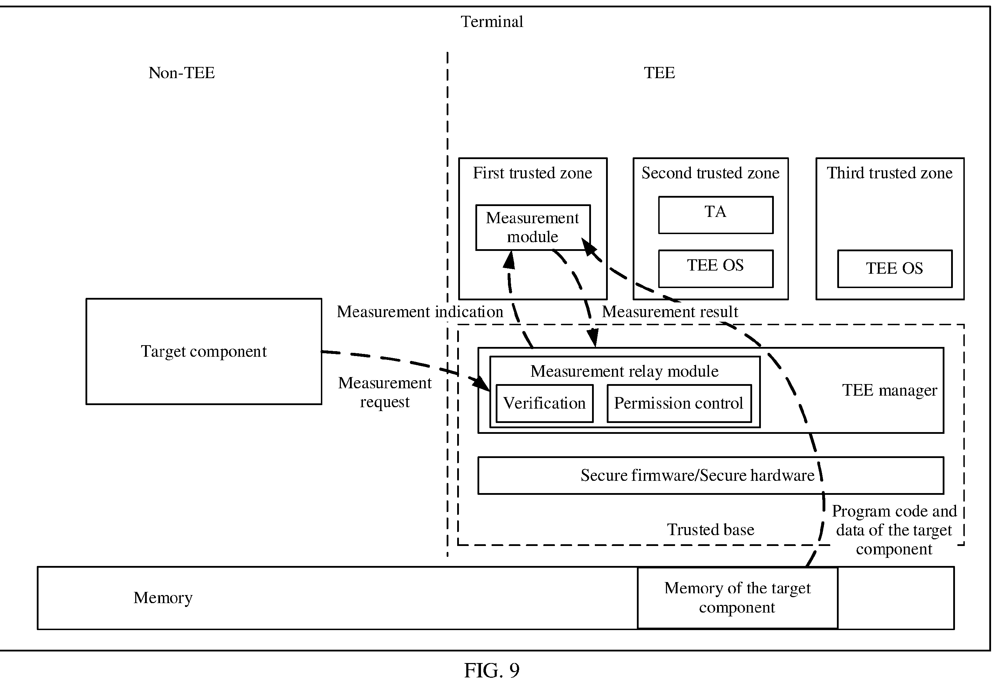

FIG. 9 is a diagram of an example of module interaction. Refer to FIG. 9. For example, when there is an integrity verification requirement for a target component, the target component sends a measurement request to a TEE manager. For example, the measurement request includes but is not limited to identification information (for example, an ID of the target component) and memory address information (for a concept thereof, refer to the foregoing description) of the target component.

Optionally, the target component may send the measurement request to a measurement relay module through an API interface of the TEE manager.

For example, the integrity requirement of the target component may be that the target component needs to read data from or write data into a storage before determining, in response to a received user instruction, that the target component needs to be started, or after the target component is started. This may be specifically set based on an actual requirement. This is not limited in this application.

It should be noted that there may be one or more target components in this embodiment of this application. In other words, a plurality of target components may simultaneously or sequentially send measurement requests to the TEE manager, to request to perform integrity measurement. The TEE manager and a measurement module may perform serial or parallel processing on the measurement requests of the plurality of target components. This is not limited in this application. A manner for processing a plurality of components is the same as a manner for processing a single component. In this application, only a single target component is used as an example for description, and details are not described below again.

In a possible implementation, a TEE may further include a period measurement module (not shown in the figure), and a timer may be disposed in the period measurement module. Timing duration of the timer may be set based on an actual requirement, for example, may be five minutes. This is not limited in this application. For example, the period measurement module may maintain identification information and memory address information of all components in a non-TEE or a component on which integrity measurement needs to be performed. The measurement module sends a measurement request to the measurement relay module at a timer triggering moment. The measurement request includes but is not limited to identification information and memory address information of at least one component that are maintained by the measurement module, and is used to request to perform integrity verification on the at least one component.

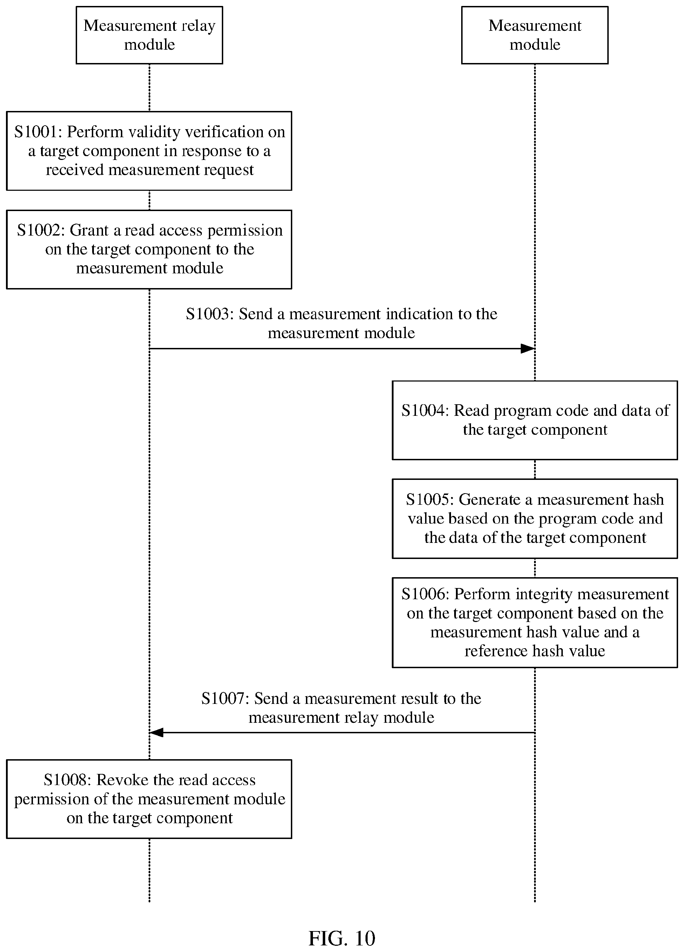

For example, after receiving the measurement request, the measurement relay module may perform an integrity measurement procedure. FIG. 10 is a schematic flowchart of an example of integrity measurement. Refer to FIG. 10. The integrity measurement specifically includes but is not limited to the following steps.

S1001: A measurement relay module performs validity verification on a target component in response to a received measurement request.

For example, the measurement relay module (which is specifically a verification unit, and details are not described below) obtains the measurement request from the target component, and obtains identification information and memory address information of the target component in the measurement request.

As described above, an address space layout list is maintained in a memory of the measurement relay module (that is, a TEE manager). The list includes but is not limited to identification information and memory address information of a component (including all components in a non-TEE or a component on which integrity measurement needs to be performed, and details are not described below). For example, the measurement relay module may match the identification information of the component in the measurement request with identification information of the component in the address space layout list.

In an example, if matching does not succeed, the measurement relay module may determine that the component that sends the measurement request is an invalid component. In other words, in this embodiment of this application, if the invalid component disguises as a valid component to apply for integrity measurement, because the measurement relay module does not pre-store related information of the invalid component, validity verification fails. The measurement relay module may determine that the component is an invalid component, and reject an integrity measurement request of the component, to prevent the invalid component from attacking a measurement module by using the measurement relay module.

In another example, if matching succeeds, the measurement relay module obtains memory address space corresponding to the successfully matching identification information. The measurement relay module compares the memory address information in the measurement request with successfully matching address space information, to determine whether the memory address information is consistent with the address space information.

In an example, if the memory address information is consistent with the address space information, it is determined that validity verification succeeds, and S1002 is performed. In another example, if the memory address information is inconsistent with the address space information, it is determined that validity verification fails. The measurement relay module ends the integrity measurement procedure specific to the target component. Optionally, the measurement relay module may further execute an exception handling procedure. The exception handling procedure may include displaying alarm information on a display of a terminal, requesting a processor to uninstall an invalid component, or the like. This is not limited in this application.

S1002: The measurement relay module grants a read access permission on the target component to the measurement module.

For example, after determining that validity verification on the target component succeeds, the verification unit may send a trigger instruction to a permission control unit, to instruct the permission control unit to grant a permission to the measurement module.

For example, as described above, the TEE manager maintains a measurement module page table. The measurement module page table includes an access permission of the measurement module on each component in the page table. In addition, in an initial phase, the access permission of the measurement module on each component is access forbidden.

For example, the measurement relay module (which is specifically a permission control unit, and details are not described below) obtains a measurement module page table. The measurement relay module performs matching in the page table based on the memory address information of the target component that is obtained from the measurement request, and obtains physical address information and permission information corresponding to successfully matching memory address information. Current permission information of the target component indicates that access is forbidden, that is, the measurement module is forbidden to access the target component. This may also be understood as that the measurement module is forbidden to read data from or write data into a memory of the target component.

For example, the measurement relay module modifies an access permission of the measurement module on the target component to a read access permission, that is, modifies permission information that is corresponding to the target component and that is in the page table to the read access permission (which may also be referred to as a readable access permission or a read-only access permission). In other words, the measurement module may read data in the memory of the target component, but the measurement module does not have a permission on the target component other than the read access permission. For example, the measurement module cannot perform an operation (for example, write, that is, does not have a write access permission) on data in the memory of the target component.

S1003: The measurement relay module sends a measurement indication to the measurement module.

For example, after granting a permission to the measurement module, the measurement relay module sends the measurement indication to the measurement module. The measurement indication includes but is not limited to the memory address information of the target component. The measurement indication indicates the measurement module to perform integrity verification on the target component.

S 1004: The measurement module reads program code and data of the target component.

For example, the measurement module receives the measurement indication, and extracts the memory address information. The measurement module may obtain the program code and the data of the target component from corresponding memory space based on the memory address information (the data may be empty, and details are not described below).

Specifically, as described above, the measurement module is corresponding to a measurement module page table. The measurement module may send a read request to an MMU (Memory Management Unit, memory management unit). The read request may include the memory address information of the target component, and is used to request to read content in memory space indicated by the memory address information of the target component.

For example, the MMU may traverse the measurement module page table based on the memory address information of the target component, to search for permission information corresponding to the memory address information. In this example, as described above, the measurement relay module has granted a permission to the measurement module, that is, information about access permission of the measurement module on the target component is a read access permission. Correspondingly, the MMU determines, based on the access permission information corresponding to the memory address information, that the measurement module has a read access permission for the memory of the target component, that is, the measurement module is allowed to read data from memory space of the target component.

For example, the measurement module may read, from the memory based on a correspondence between memory address information and physical address information in the page table, content stored in the memory space of the target component. The content includes but is not limited to the program code and the data of the target component. For a specific reading manner of the measurement module, refer to an embodiment of an existing technology. This is not limited in this application.

S1005: The measurement module generates a measurement hash value based on the program code and the data of the target component.

For example, after reading the program code and the data of the target component from the memory of the target component, the measurement module may generate the measurement hash value of the target component based on the program code and the data. For a generation manner thereof, refer to an embodiment of an existing technology. This is not limited in this application.

S1006: The measurement module performs integrity verification on the target component based on the measurement hash value and a reference hash value.

For example, as described above, the measurement module maintains a reference hash value list. As described above, the hash value list may include different combinations:
In an example, if the reference hash value list includes but is not limited to a correspondence between memory address information of each component (which may be all components in the non-TEE or a component on which integrity measurement needs to be performed) and a reference hash value, correspondingly, the measurement module may traverse the reference hash value list based on a memory address of the target component in the measurement indication. The measurement module obtains a reference hash value corresponding to successfully matching memory address information.

In another example, if the reference hash value list includes but is not limited to a correspondence between identification information of each component and a reference hash value, correspondingly, the measurement indication sent by the measurement relay module further needs to include the identification information of the target component. The measurement module may traverse the reference hash value list based on the identification information of the target component, and obtain a reference hash value corresponding to successfully matching identification information.

In still another example, if the reference hash value list includes only a reference hash value of each component, the measurement module may match the measurement hash value with reference hash values in the list one by one. If matching succeeds, that is, the list includes a reference hash value that is the same as the measurement hash value, it may be directly determined that integrity verification succeeds. If matching fails, it is determined that integrity measurement fails.

In this embodiment of this application, after obtaining the reference hash value of the target component, the measurement module compares the reference hash value with the measurement hash value.

In an example, if the reference hash value is consistent with the measurement hash value, it is determined that integrity measurement succeeds, that is, the program code and the data of the target component are complete and not tampered with. In this case, S1007 is performed.

In another example, if the reference hash value is inconsistent with the measurement hash value, it is determined that integrity measurement fails. For example, if the target component is tampered with by an attacker, program code is inconsistent with the program code in an initial state. In this case, the measurement hash value of the target component generated by the measurement module is inconsistent with the reference hash value.

S1007: The measurement module sends a measurement result to the measurement relay module.

For example, after performing integrity verification, the measurement module obtains the measurement result. The measurement result includes an integrity verification success (or referred to as an integrity measurement success) or an integrity verification failure (or referred to as an integrity measurement failure).

For example, the measurement module sends the address information of the target component and the measurement result to the measurement relay module. Optionally, if the measurement indication sent by the measurement relay module to the measurement module includes the identification information of the target component, the measurement module may also feed back the identification information of the target component and the measurement result to the measurement relay module, to identify the target component corresponding to the measurement result.

S1008: The measurement relay module revokes the read access permission of the measurement module on the target component.

For example, after receiving the measurement result sent by the measurement module, the measurement relay module may determine that the measurement module has completed an integrity measurement operation on the target component. The measurement relay module immediately revokes the read access permission of the measurement module on the target component.

Specifically, the measurement relay module (which is specifically the permission control unit) traverses the address space layout list based on the identification information or the memory address information of the target component, and determines access permission information corresponding to successfully matching identification information or memory address information. The current access permission information is the read access permission.

For example, the measurement relay module modifies the access permission information to access forbidden, that is, revokes the read access permission of the measurement module on the target component. In this way, if the measurement module has a vulnerability, an attacker attacks the measurement module, and attempts to read the memory of the target component by using the measurement module, to modify program code and/or data in the memory of the target component. In this scenario, because the access permission of the measurement module on the target component is an access forbidden permission, the measurement module cannot perform an operation (including read or write) on content in the memory of the target component. In addition, in an integrity measurement process, the measurement module has only a read access permission. Therefore, after the measurement module is attacked, because the measurement module does not have another access permission on the memory of the target component, for example, a write access permission, correspondingly, the attacker cannot tamper with the content in the memory of the target component either by using the measurement module. **In** conclusion, in this embodiment of this application, a permission of the measurement module on the target component is dynamically adjusted, and a granularity of permission control is specific to a single component, and is further specific to a read access permission of the single component. Therefore, an attacker can be effectively prevented from tampering with the target component by using the measurement module, to protect security and integrity of the component.

Still refer to FIG. 9. For example, after obtaining the measurement result fed back by the measurement module, the measurement relay module may further feed back the measurement result to the target component and/or a remote user. For processing of the target component, refer to the description in the foregoing embodiment. Details are not described herein again.

Optionally, as described above, the measurement request may be sent by a period measurement module. Correspondingly, the measurement relay module feeds back the measurement result to the period measurement module. The period measurement module may feed back all measurement results to a corresponding component. Alternatively, the period measurement module may feed back a measurement result only to a component whose measurement result is an integrity measurement failure. This is not limited in this application.

It should be noted that, in this embodiment of this application, because an access permission in the measurement module page table is dynamically set (a specific manner is described below), at any moment after the initial phase, all access permissions in the measurement module page table may be access forbidden, or there may be a case in which a permission of at least one component is a read access permission. For example, in a process in which a system performs integrity measurement on a first component, an access permission of the measurement module on the first component is a read access permission, and an access permission of another component is access forbidden. Before the integrity measurement procedure specific to the first component ends, the measurement relay module may receive a measurement request from a second component, and modify an access permission of the measurement module on the second component to a read access permission. At the current moment, in the measurement module page table, both the access permission of the measurement module on the first component and the access permission of the measurement module on the second component are the read access permission.

It should be further noted that in FIG. 10, only one integrity measurement operation on a single target component is used as an example for description. **In** this embodiment of this application, a terminal may perform an integrity measurement operation on a plurality of target components based on the procedure in FIG. 10. Integrity measurement operations on all the components are independent procedures, that is, the operations do not affect each other. For example, a single target component may also trigger an integrity measurement procedure for a plurality of times. In each integrity measurement procedure, all access permissions of the measurement module on the component are dynamically modified.

In a possible implementation, S1005 and S1006 may also be completed by a remote verification server. In this example, the measurement module does not need to pre-store a reference hash value in a loading phase, and a reference hash value may be stored on a remote server. After generating the measurement hash value, the measurement module may send the measurement hash value to the remote server, and the remote server performs an operation of comparing the measurement hash value with the reference hash value, and feeds back a measurement result to the measurement module.

In conclusion, in the embodiments of this application, because the measurement module is isolated from another component, and the measurement module is protected, a probability that an attacker attacks the measurement module by using another module can be reduced. For example, if the attacker attempts to access the measurement module by using the TEE app in the second trusted zone, to tamper with the program code of the measurement module, because another component does not have a permission to access the measurement module, access to the memory of the measurement module is denied, thereby preventing the measurement module from being attacked. **In** addition, the measurement module depends on the TEE manager whose program code is lightweight (for example, a magnitude of 10 KLOC). To be specific, the measurement module exchanges control information with the TEE manager, and does not depend on an operating system with a relatively heavy weight, thereby narrowing an attack surface and reducing an attack probability. In addition, if the attacker attacks the measurement module by using the TEE manager, because a granularity of an access permission of the measurement module is set to a read access permission specific to a single component, the attacker cannot tamper with program code of the component by using the measurement module, thereby further ensuring security of the component. For example, if the attacker successfully attacks the measurement module by using the TEE manager, and further attempts to tamper with another component by using the measurement module, access is denied because an access permission of the measurement module on the component is access forbidden.

It may be understood that, to implement the foregoing functions, the electronic device includes corresponding hardware and/or software modules for performing the functions. With reference to algorithm steps of examples described in embodiments disclosed in this specification, this application can be implemented in a form of hardware or a combination of hardware and computer software. Whether a function is performed by hardware or hardware driven by computer software depends on particular applications and design constraints of the technical solutions. A person skilled in the art may use different methods to implement the described functions for each particular application with reference to embodiments, but it should not be considered that the implementation goes beyond the scope of this application.

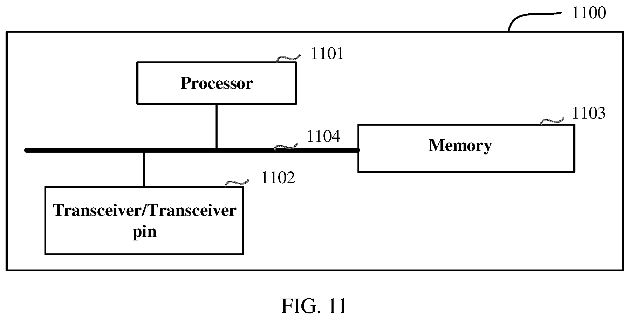

In an example, FIG. 11 is a block diagram of an apparatus 1100 according to an embodiment of this application. The apparatus 1100 may include a processor 1101 and a transceiver/transceiver pin 1102. Optionally, the apparatus 1100 further includes a memory 1103.

Components of the apparatus 1100 are coupled together through a bus 1104. In addition to a data bus, the bus 1104 further includes a power bus, a control bus, and a status signal bus. However, for clear description, various buses are referred to as the bus 1104 in the figure.

Optionally, the memory 1103 may be configured to store instructions in the foregoing method embodiments. The processor 1101 may be configured to: execute the instructions in the memory 1103, control a receive pin to receive a signal, and control a transmit pin to send a signal.

The apparatus 1100 may be the electronic device or a chip of the electronic device in the foregoing method embodiments.

In another example, an embodiment of this application provides an integrity measurement apparatus. The apparatus includes environments such as a trusted execution environment TEE and a non-TEE. The TEE includes but is not limited to a first trusted zone and a TEE management module. For example, the first trusted zone is isolated from each component in the non-TEE, and the first trusted zone is isolated from another trusted zone in the TEE. The first trusted zone includes a measurement module. In other words, the measurement module is isolated from each component in the non-TEE, and the measurement module is isolated from another trusted zone in the TEE. For example, the TEE management module is lightweight. Specifically, the TEE management module is configured to obtain measurement request information, where the measurement request information is used to request to perform integrity measurement on a target component. The target component is a component in the TEE or a component in the non-TEE. The TEE management module is further configured to send measurement indication information to the measurement module in response to the measurement request information, where the measurement indication information indicates the measurement module to perform integrity measurement on the target component. The measurement module is configured to: perform integrity measurement on the target component based on the measurement request information, and obtain an integrity measurement result. The integrity measurement result indicates whether the target component is complete. The measurement module is further configured to feed back the integrity measurement result to the TEE management module.

In a possible implementation, the TEE further includes a second trusted zone, the second trusted zone includes at least one TEE application and a TEE operating system, and the at least one TEE application depends on the TEE operating system; and the first trusted zone does not include a TEE operating system, and the measurement module depends on the TEE management module.

In a possible implementation, the TEE management module is specifically configured to: perform validity verification on the target component based on the measurement request information; and send the measurement indication information to the measurement module when validity verification on the target component succeeds.

In a possible implementation, the measurement request information includes identification information and target storage address information of the target component, and the target storage address information indicates target storage space in which program code of the target component is stored. The TEE management module is specifically configured to: verify the identification information and the target storage address information of the target component based on pre-stored component information, where the component information is obtained by the TEE management module when the TEE management module is installed in the electronic device, and the component information includes identification information and storage address information that correspond to all components in the non-TEE; and when verification on the identification information and the target storage address information of the target component succeeds, determine that validity verification on the target component succeeds.

In a possible implementation, the TEE management module is specifically configured to: when validity verification on the target component succeeds, update, by the TEE management module, an access permission of the target component on the target storage space from a first access permission to a second access permission, and send the measurement indication information to the measurement module, where the first access permission is an access forbidden permission, and the second access permission is a read access permission; and the measurement indication information includes the target storage address information. The measurement module is configured to: obtain the program code of the target component from the target storage space based on the target storage address information and the second access permission, and perform integrity measurement on the program code of the target component.

In a possible implementation, the TEE management module is specifically configured to: after receiving the integrity measurement result fed back by the measurement module, update the access permission of the target component on the target storage space from the second access permission to the first access permission.

All related content of the steps in the foregoing method embodiments may be cited in function descriptions of the corresponding functional modules. Details are not described herein again.

An embodiment further provides a computer storage medium. The computer storage medium stores computer instructions, and when the computer instructions are run on an electronic device, the electronic device is enabled to perform the foregoing related method steps, to implement the method in the foregoing embodiments.

An embodiment further provides a computer program product. When the computer program product runs on a computer, the computer is enabled to perform the foregoing related steps, to implement the method in the foregoing embodiments.

In addition, an embodiment of this application further provides an apparatus. The apparatus may be specifically a chip, a component, or a module. The apparatus may include a processor and a memory that are connected to each other. The memory is configured to store computer-executable instructions. When the apparatus runs, the processor may execute the computer-executable instructions stored in the memory, to enable the chip to perform the method in the foregoing method embodiments.

The electronic device, the computer storage medium, the computer program product, and the chip provided in the embodiments are all configured to perform the corresponding method provided above. Therefore, for beneficial effect that can be achieved, refer to beneficial effect of the corresponding method provided above. Details are not described herein again.

Based on the descriptions about the foregoing implementations, a person skilled in the art may understand that, for a purpose of convenient and brief description, division into the foregoing functional modules is used as an example for illustration. In actual application, the foregoing functions may be allocated to different functional modules and implemented based on requirements. In other words, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, the module or unit division is merely logical function division and may be another division manner in actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed in a plurality of different places. Some or all of the units may be selected based on an actual requirement to achieve the objectives of the solutions in the embodiments.

In addition, functional units in embodiments of this application may be integrated into one processing unit, or each of the units may exist alone physically, or two or more units are integrated into one unit. The integrated unit may be implemented in a form of hardware, or may be implemented in a form of a software functional unit.

Any content in embodiments of this application and any content in a same embodiment can be freely combined. Any combination of the foregoing content falls within the scope of this application.

If the integrated unit is implemented in a form of a software functional unit and sold or used as an independent product, the integrated unit may be stored in a readable storage medium. Based on such an understanding, the technical solutions in embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods described in embodiments of this application. The foregoing storage medium includes any medium that can store program code such as a USB flash drive, a removable hard disk, a read-only memory (read-only memory, ROM), a random access memory (random access memory, RAM), a magnetic disk, or an optical disc.

The foregoing describes embodiments of this application with reference to the accompanying drawings. However, this application is not limited to the foregoing specific implementations. The foregoing specific implementations are merely examples instead of limitations. Inspired by this application, a person of ordinary skill in the art may further make modifications without departing from the purposes of this application and the protection scope of the claims, and all the modifications shall fall within the protection of this application.

Methods or algorithm steps described with reference to content disclosed in embodiments of this application may be implemented by using hardware, or may be implemented by a processor executing software instructions. The software instruction may include a corresponding software module. The software module may be stored in a random access memory (Random Access Memory, RAM), a flash memory, a read-only memory (Read Only Memory, ROM), an erasable programmable read-only memory (Erasable Programmable ROM, EPROM), an electrically erasable programmable read-only memory (Electrically EPROM, EEPROM), a register, a hard disk, a removable hard disk, a compact disc read-only memory (CD-ROM), or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC.

A person skilled in the art should be aware that in the foregoing one or more examples, functions described in embodiments of this application may be implemented by hardware, software, firmware, or any combination thereof. When the functions are implemented by software, the foregoing functions may be stored in a computer-readable medium or transmitted as one or more instructions or code in a computer-readable medium. The computer-readable medium includes a computer storage medium and a communication medium, where the communication medium includes any medium that enables a computer program to be transmitted from one place to another. The storage medium may be any available medium accessible to a general-purpose or a dedicated computer.

The foregoing describes embodiments of this application with reference to the accompanying drawings. However, this application is not limited to the foregoing specific implementations. The foregoing specific implementations are merely examples instead of limitations. Inspired by this application, a person of ordinary skill in the art may further make modifications without departing from the purposes of this application and the protection scope of the claims, and all the modifications shall fall within the protection of this application.

## Claims

1. An integrity measurement method, applied to an electronic device, wherein the electronic device comprises a trusted execution environment TEE and a non-TEE, the TEE comprises a first trusted zone and a TEE management module, the first trusted zone is isolated from each component in the non-TEE, the first trusted zone is isolated from another trusted zone in the TEE, the first trusted zone comprises a measurement module, and the TEE management module is lightweight; and the method comprises:
obtaining, by the TEE management module, measurement request information, wherein the measurement request information is used to request to perform integrity measurement on a target component, and the target component is a component in the TEE or a component in the non-TEE;
sending, by the TEE management module, measurement indication information to the measurement module in response to the measurement request information, wherein the measurement indication information indicates the measurement module to perform integrity measurement on the target component; and
receiving, by the TEE management module, an integrity measurement result fed back by the measurement module, wherein the integrity measurement result indicates whether the target component is complete.

2. The method according to claim 1, wherein the TEE further comprises a second trusted zone, the second trusted zone comprises at least one TEE application and a TEE operating system, and the at least one TEE application depends on the TEE operating system; and
the first trusted zone does not comprise a TEE operating system, and the measurement module depends on the TEE management module.

3. The method according to claim 1, wherein the sending, by the TEE management module, measurement indication information to the measurement module in response to the measurement request information comprises:
performing, by the TEE management module, validity verification on the target component based on the measurement request information; and
when validity verification on the target component succeeds, sending, by the TEE management module, the measurement indication information to the measurement module.

4. The method according to claim 3, wherein the measurement request information comprises identification information and target storage address information of the target component, and the target storage address information indicates target storage space in which program code of the target component is stored; and the performing, by the TEE management module, validity verification on the target component based on the measurement request information comprises:
verifying, by the TEE management module, the identification information and the target storage address information of the target component based on pre-stored component information, wherein the component information is obtained by the TEE management module when the TEE management module is installed in the electronic device, and the component information comprises identification information and storage address information that correspond to all components in the non-TEE; and
when verification on the identification information and the target storage address information of the target component succeeds, determining, by the TEE management module, that validity verification on the target component succeeds.

5. The method according to claim 4, wherein the sending, by the TEE management module, measurement indication information to the measurement module in response to the measurement request information further comprises:
when validity verification on the target component succeeds, updating, by the TEE management module, an access permission of the target component on the target storage space from a first access permission to a second access permission, and sending the measurement indication information to the measurement module, wherein the first access permission is an access forbidden permission, and the second access permission is a read access permission; and the measurement indication information comprises the target storage address information, so that the measurement module obtains the program code of the target component from the target storage space based on the target storage address information and the second access permission, and performs integrity measurement on the program code of the target component.

6. The method according to claim 5, wherein after the receiving, by the TEE management module, an integrity measurement result fed back by the measurement module, the method further comprises:
updating, by the TEE management module, the access permission of the target component on the target storage space from the second access permission to the first access permission.

7. The method according to any one of claims 1 to 6, wherein the target component is an application, an operating system, or a service.

8. An integrity measurement apparatus, wherein the apparatus comprises a trusted execution environment TEE and a non-TEE, the TEE comprises a first trusted zone and a TEE management module, the first trusted zone is isolated from each component in the non-TEE, the first trusted zone is isolated from another trusted zone in the TEE, the first trusted zone comprises a measurement module, and the TEE management module is lightweight;
the TEE management module is configured to obtain measurement request information, wherein the measurement request information is used to request to perform integrity measurement on a target component, and the target component is a component in the TEE or a component in the non-TEE;
the TEE management module is further configured to send measurement indication information to the measurement module in response to the measurement request information, wherein the measurement indication information indicates the measurement module to perform integrity measurement on the target component;
the measurement module is configured to: perform integrity measurement on the target component based on the measurement request information, and obtain an integrity measurement result, wherein the integrity measurement result indicates whether the target component is complete; and
the measurement module is further configured to feed back the integrity measurement result to the TEE management module.

9. The apparatus according to claim 8, wherein the TEE further comprises a second trusted zone, the second trusted zone comprises at least one TEE application and a TEE operating system, and the at least one TEE application depends on the TEE operating system; and
the first trusted zone does not comprise a TEE operating system, and the measurement module depends on the TEE management module.

10. The apparatus according to claim 8, wherein the TEE management module is specifically configured to:
perform validity verification on the target component based on the measurement request information; and
when validity verification on the target component succeeds, send the measurement indication information to the measurement module.

11. The apparatus according to claim 10, wherein the measurement request information comprises identification information and target storage address information of the target component, and the target storage address information indicates target storage space in which program code of the target component is stored; and the TEE management module is specifically configured to:
verify the identification information and the target storage address information of the target component based on pre-stored component information, wherein the component information is obtained by the TEE management module when the TEE management module is installed in the electronic device, and the component information comprises identification information and storage address information that correspond to all components in the non-TEE; and
when verification on the identification information and the target storage address information of the target component succeeds, determine that validity verification on the target component succeeds.

12. The apparatus according to claim 11, wherein the TEE management module is specifically configured to:
when validity verification on the target component succeeds, update, by the TEE management module, an access permission of the target component on the target storage space from a first access permission to a second access permission, and send the measurement indication information to the measurement module, wherein the first access permission is an access forbidden permission, and the second access permission is a read access permission; and the measurement indication information comprises the target storage address information; and
the measurement module is configured to: obtain the program code of the target component from the target storage space based on the target storage address information and the second access permission, and perform integrity measurement on the program code of the target component.

13. The apparatus according to claim 12, wherein the TEE management module is specifically configured to:
after receiving the integrity measurement result fed back by the measurement module, update the access permission of the target component on the target storage space from the second access permission to the first access permission.

14. The apparatus according to any one of claims 8 to 13, wherein the target component is an application, an operating system, or a service.

15. A computer storage medium, comprising computer instructions, wherein when the computer instructions are run on an electronic device, the electronic device is enabled to perform the method according to any one of claims 1 to 7.

16. A computer program product, wherein when the computer program product runs on a computer, the computer is enabled to perform the method according to any one of claims 1 to 7.

17. A chip, comprising one or more interface circuits and one or more processors, wherein the interface circuit is configured to: receive a signal from a memory of an electronic device, and send the signal to the processor, wherein the signal comprises computer instructions stored in the memory; and when the processor executes the computer instructions, the electronic device is enabled to perform the method according to any one of claims 1 to 7.
